# EUROPÄISCHE PATENTSCHRIFT

(11) **EP 3 204 239 B1**
(45) Veröffentlichungstag und Bekanntmachung des Hinweises auf die Patenterteilung: **19.02.2020**
(21) Anmeldenummer: 15745212.9
(22) Anmeldetag: 04.08.2015
(51) Int. Cl.: B60C 9/00, B60C 9/18, B60C 9/22

(54) **FAHRZEUGLUFTREIFEN AUFWEISEND EINE GÜRTELBANDAGE**
PNEUMATIC VEHICLE TYRES COMPRISING A BELT BANDAGE
PNEUMATIQUE DE VÉHICULE POURVU D'UN BANDAGE D'ARMATURE

(30) Priorität: 09.10.2014 DE 102014220518
(43) Veröffentlichungstag der Anmeldung: 16.08.2017
(73) Patentinhaber: Continental Reifen Deutschland GmbH, 30165 Hannover (DE)
(72) Erfinder: REESE, Wolfgang, 31228 Peine (DE)
(74) Vertreter: Finger, Karsten
(86) Internationale Anmeldenummer: PCT/EP2015/067899
(87) Internationale Veröffentlichungsnummer: WO 2016/055189

(56) Entgegenhaltungen:
- WO-A1-2005/002884
- DE-A1-102008 037 615
- JP-A- 2008 081 076

## Beschreibung

Die Erfindung betrifft einen Fahrzeugluftreifen mit einer Karkasse, einem profilierten Laufstreifen, einem Gürtel und einer diesen Gürtel bedeckenden ein- oder mehrlagigen Gürtelbandage mit in Umfangsrichtung des Reifens verlaufenden Festigkeitsträgern, wobei zumindest eine Bandagenlage der Gürtelbandage in ihrer axialen Ausdehnung zwei Seitenabschnitte, welche jeweils eine axiale Kante der Bandagenlage umfassen, sowie einen zwischen den beiden Seitenabschnitten angeordneten Mittenabschnitt umfasst, wobei jeder Seitenabschnitt zumindest einen Hybridfestigkeitsträger aufweist, wobei der Mittenabschnitt zumindest einen Festigkeitsträger aufweist, welcher einen geringeren Elastizitätsmodul aufweist als die Hybridfestigkeitsträger der Seitenabschnitte, jeweils gemessen gemäß ASTM D885M bei einer Dehnung von 3% und wobei der zumindest eine Hybridfestigkeitsträger jedes Seitenabschnittes ein Hybridcord aus wenigstens zwei miteinander vertwisteten Garnen ist, wobei wenigstens ein erstes Garn ein hochmoduliges Garn ist und wobei ein weiteres Garn ein niedermoduliges Garn ist,
Um bei Fahrzeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, der im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit einer Kautschukmischung durchläuft.

Die Festigkeitsträger der Gürtelbandage sollen bei der Reifenherstellung eine ausreichende Erhebung bei der Bombage sowie in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten.

Bei der Bombage und Vulkanisation des Reifens erhebt/dehnt sich der Reifen in der Regel im Schulterbereich um ca. 0,1 % bis 1,5 % und im Mittenbereich um ca. 2 % bis 4 % im Vergleich zum unvulkanisierten Rohling, wenn der Rohling auf einer flachen Trommel gewickelt wird. Um diesen Anforderungen zu genügen, sollten die Festigkeitsträger eine für die Reifenherstellung ausreichende Bruchdehnung aufweisen und sich im Mittenbereich des Fahrzeugluftreifens bis zu einer Dehnung von ca. 3% bis 4% mit mäßigem Kraftaufwand und ab einer höheren Dehnung nur noch mit sehr hohem Kraftaufwand dehnen lassen.

Die DE 10 2008 037 615 A1 offenbart einen Fahrzeugluftreifen mit einer Gürtelbandage, welche als Festigkeitsträger einen Hybridcord aus einem Garn aus Aramid und einem Garn aus Polyamid, welche miteinander verdreht sind, aufweist. Das Aramid-Garn und das Polyamid-Garn weisen jeweils eine Feinheit von 250 dtex bis 3000 dtex auf.

Die JP 2008 081076 A offenbart einen Fahrzeugluftreifen mit einer Gürtelbandage aufweisend einen Hybridcord aus einem Polyketon-Garn und aus einem Nylon-Garn, welche miteinander verdreht sind.

Aus der EP 1580030 B1 ist ein Fahrzeugluftreifen bekannt, dessen Gürtelbandage in ihrem Mittenabschnitt Corde aus PA 6.6 mit einen niedereren Elastizitätsmodul aufweisen als die Corde der Seitenabschnitte, welche als Verbund aus Aramidfasern und PA 6.6 Fasern ausgebildet sind. Im Fahrbetrieb, insbesondere im Hochgeschwindigkeitseinsatz, ermöglicht die Verwendung von hochmoduligerem Material in den Seitenbereichen eine gute Bindung der dort auftretenden Kräfte, wohingegen der Fahrzeugluftreifen durch das niedermoduligere PA6.6 im Mittenbereich eine runde Kontur entwickelt und somit positive Hochgeschwindigkeitseigenschaften aufweist. Eine solche Gürtelbandage wirkt sich somit positiv auf die Schnelllauffestigkeit und Dauerhaltbarkeit des Fahrzeugluftreifens aus.

Aus der WO 2005/002884 A1 ist ein Fahrzeugluftreifen mit einer Gürtelbandage mit einer Bandagenlage bekannt welche zumindest einen ersten Festigkeitsträger und einen zweiten Festigkeitsträger aufweist. Der erste Festigkeitsträger ist dabei ein Hybridcord aus zumindest einem hochmoduligen Garn und einem niedermoduligen Garn. Der zweite Festigkeitsträger weist einen niedrigeren Elastizitätsmodul als der erste Festigkeitsträger auf. Das Verhältnis der Fadendichte der Hybridcorde zur Fadendichte der zweiten Festigkeitsträger beträgt in einem Mittenbereich 1:1 und in einem Seitenbereich 2:1.

Die Entwicklung geht dahin, den Rollwiderstand zu verbessern. Es ist dabei bekannt, dass dünne hochmodulige Materialien als Festigkeitsträger der Gürtelbandage zur Verbesserung des Rollwiderstands beitragen. Hierbei gibt es jedoch den Zielkonflikt, dass hochmodulige Materialien mit zu geringer Bruchdehnung den Bau auf einer Expansions-Trommel nicht ermöglichen.

Der Erfindung liegt die Aufgabe zugrunde, einen Fahrzeugluftreifen mit einer Gürtelbandage bereitzustellen, der einen verringerten Rollwiderstand und gute Hochgeschwindigkeitseigenschaften aufweist und der zudem zuverlässig herzustellen ist.

Gelöst wird die gestellte Aufgabe erfindungsgemäß dadurch, dass der zumindest eine Hybridfestigkeitsträger jedes der Seitenabschnitte eine Feinheit von höchstens 550 dtex, bevorzugt von höchstens 500 dtex, besonders bevorzugt von höchstens 460 dtex aufweisen und dass der zumindest eine Festigkeitsträger des Mittenabschnitts eine Feinheit von höchstens 1100 dtex, bevorzugt von höchstens 600 dtex, besonders bevorzugt von höchstens 500 dtex, aufweist.

Im Rahmen der Erfindung hat sich herausgestellt, dass solche Festigkeitsträger mit einer derart geringen Feinheit sehr gut für die Gürtelbandage von Fahrzeugluftreifen geeignet sind.

Die Festigkeitsträger in den Seitenabschnitten sind Hybridcorde aus wenigstens einem hochmoduligen Garn und wenistens einem niedermoduligen Garn, welche miteinander vertwistet sind. Hierdurch ist das hochmodulige Garn auf eine helikale Bahn gebracht, um ihm eine konstruktive Dehnung im Hybridcord zu ermöglichen und die Bruchdehnung zu erhöhen. Eine Verringerung der Feinheit solcher Hybridcorde zur Verbesserung des Rollwiderstandes führt im Allgemeinen jedoch zu einem geringeren konstruktiven Dehnungsvermögen und damit zu einer Verminderung der Bruchdehnung.

Ein "Garn" ist im Rahmen der vorliegenden Erfindung in Anlehnung an die DIN 60900 ein linienförmiges Gebilde, das aus einzelnen Filamenten oder Fasern besteht. Bevorzugt sind die Filamente oder Fasern des Garns miteinander verdreht. Ein "Cord" besteht aus zwei oder mehr miteinander vertwisteten Garnen. Die Feinheit eines Cordes wird als die Summe der Feinheiten der Garne des Cordes berechnet.

Mit dem Begriff "hochmoduliges Garn" ist ein Garn gemeint, welches aus einem hochmoduligen Material besteht. Mit dem Begriff "niedermoduliges Garn" ist ein Garn gemeint, welches aus einem niedermoduligen Material besteht. Dabei werden das niedermodulige Garn und das hochmodulige Garn anhand der in der nachfolgenden Tabelle 1 beschriebenen Werte in (mN/tex) definiert. Es ist die Kraft bestimmt, die jeweils auf ein Garn bei 1% Dehnung und bei 2% Dehnung aufgebracht werden muss, normiert auf die Garnfeinheit in tex. Ermittelt wird nach ASTM D885.

**Tabelle 1**

| Garn/ Dehnung | 1% | 2% |
|---|---|---|
| Niedermodulig | < 150 mN/tex | < 200 mN/tex |
| Hochmodulig | > 300 mN/tex | > 500 mN/tex |

Kern der Erfindung ist es, in den beiden Seitenbereichen der Gürtelbandage, in welchen die Anforderungen an die Bruchdehnung der Festigkeitsträger geringer sind als im Mittenbereich, dünne Hybridcorde, welche sich durch eine sehr geringe Feinheit von höchstens 550 dtex, bevorzugt von höchstens 500 dtex, besonders bevorzugt von höchstens 460 dtex, auszeichnen, einzusetzen. Hierdurch ist die Gürtellage in den Seitenabschnitten dünner ausführbar, sodass das Gewicht des Reifens und der Wärmeaufbau beim Abrollen des Reifens verringert werden. Dadurch wird der Rollwiderstand des Reifens reduziert. Es hat sich gezeigt, dass eine Reduktion der Feinheit der höhermoduligen Festigkeitsträger der Seitenbereiche den Rollwiderstand positiv beeinflusst. Auch lassen sich solch dünne Corde in höherer Dichte anordnen, wodurch die Gürtelbanddage eine sehr gute Hochgeschwindigkeitshaltbarkeit gewährleistet.

Der oder die niedermoduligeren Festigkeitsträger des Mittenabschnitts gewährleisten die ausreichende Erhebung bei Reifenbau und im Einsatz. Auch diese Festigkeitsträger sind mit einer geringen Feinheit ausgeführt, was sich positiv auf den Rollwiderstand auswirkt.

Der Einsatz von hochmoduligem Material in den Seitenabschnitten sowie der Einsatz von Festigkeitsträgern im Mittenabschnitt, deren Elastizitätsmodul geringer ist als das Elastizitätsmodul der Hybridcorde der Seitenabschnitte, gewährleistet weiterhin sehr gute Hochgeschwindigkeitseigenschaften des Reifens.

Hierdurch ist ein Fahrzeugluftreifen mit einer Gürtelbandage zur Verfügung gestellt, der bei weiterhin guten Hochgeschwindigkeitseigenschaften einen verringerten Rollwiderstand aufweist und der die in den axialen Bereichen des Reifens unterschiedlichen Anforderungen an die Erhebung bei der Bombage und in der Vulkanisationsform zulassen und somit zuverlässig herzustellen ist.

Für einen problemlosen Reifenbau ist es ausreichend, wenn die Bruchdehnung der Hybridfestigkeitsträger der Seitenabschnitte in einem Bereich von 4 % bis 7 %, bevorzugt in einem Bereich von 5 % bis 6 %, beträgt.

Um die Erhebung des Reifens im Mittenbereich zu gewährleisten ist es vorteilhaft, wenn die Bruchdehnung des Festigkeitsträgers im Mittenbereich mindestens 7 %, bevorzugt mindestens 8 %, beträgt.

Die Bruchdehnung wird ermittelt nach ASTM D885.

Vorteilhafterweise besteht das hochmodulige Garn aus einem der nachfolgend genannten Materialien: Aramidfaser, Carbonfaser, Glasfaser, Basalt. Bevorzugt besteht das hochmodulige Garn aus Aramidfaser, wobei es sich bevorzugt um Fasern aus para-Aramid oder aus meta-Aramid handelt.

Vorteilhafterweise besteht das niedermodulige Garn aus einem Polyamid oder einem Polyester. Bei den Polyamiden (PA) kann es sich um die Polyamide PA 4.6, PA 6, PA 6.6, PA 10.10, PA 11 und/oder PA12, bevorzugt um PA 6.6 oder PA 10.10, handeln. Bei den Polyestern kann es sich um die Polyester Polyethylennaphthalat (PEN), Polyethylenfuranoat (PEF), Polybutylenterephthalat (PBT), Polybutylennaphttalat (PBN), Polypropylenterephthalat (PPT), Polypropylennaphthalat (PPN), Polyethylenterephthalat (PET), insbesondere um thermoplastische Polyester und/oder vernetzte ungesättigte Polyester handeln.

In einer bevorzugten Ausführungsform weisen die einzelnen Garne der Hybridcorde der Seitenabschnitte jeweils eine Feinheit von höchstens 320 dtex, bevorzugt von höchstens 240 dtex, auf. Es hat sich gezeigt, dass sich Hybridcorde aus solch dünnen Garnen hervorragend für die Seitenabschnitte einer Gürtelbandage eignen und dass eine solche Gürtelbandage einen verringerten Rollwiderstand aufweisen.

Zweckmäßig ist es dabei, wenn die Hybridcorde der Seitenabschnitte aus genau zwei oder aus genau drei Garnen gebildet sind. Zweckmäßig ist es weiter, wenn die Hybridcorde der Seitenabschnitte aus genau zwei miteinander endverdrehten Garnen gebildet sind, wobei das erste Garn ein Aramidgarn der Feinheit 220 dtex und das zweite Garn entweder ein PA 6.6 -Garn der Feinheit 235 dtex oder ein PET-Garn der Feinheit 238 dtex ist.

Zweckmäßig ist es, wenn der Festigkeitsträger des Mittenabschnitts ein Garn oder ein Cord ist.

Vorteilhaft ist es, wenn der Festigkeitsträger des Mittenabschnitts aus einem Polyamid (PA), bevorzugt aus PA 6.6 oder PA 10.10, oder einem Polyester, bevorzugt aus Polyethylenterephthalat (PET), besteht.

Um eine zuverlässige Haftung eines Festigkeitsträgers zum Gummi zu gewährleisten, ist es zweckmäßig, die Festigkeitsträger der Bandagenlage mit einer Haftimprägnierung, z.B. mit einem RFL-Dip im 1- oder 2-Bad-Verfahren, zu versehen und unter Temperatureinwirkung zu verstrecken.

Als vorteilhaft hat es sich herausgestellt, wenn jeder Seitenabschnitt auf seiner axialen Seite des Reifens zumindest die Gürtelkante der radial äußersten Gürtellage sowie die axial äußerste Gürtelkante des Gürtels abdeckt.

Zweckmäßig ist es, wenn die Gürtelbandage einlagig ausgeführt ist. Zeckmäßig ist es aber auch, wenn die Gürtelbandage zwei oder mehr Bandagenlagen aufweist, wobei zumindest eine der Bandagenlage den Mittenabschnitt und die zwei Seitenabschnitte umfasst.

Besonders bevorzugt handelt es sich bei der Gürtelbandage um eine Gürtelbandage eines Personenkraftwagens.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen radialen Querschnitt durch einen erfindungsgemäßen Fahrzeugluftreifen;
Fig. 2 eine Kraft-Dehnungskurve von im Rahmen der Erfindung geeigneten Festigkeitsträgercorden.

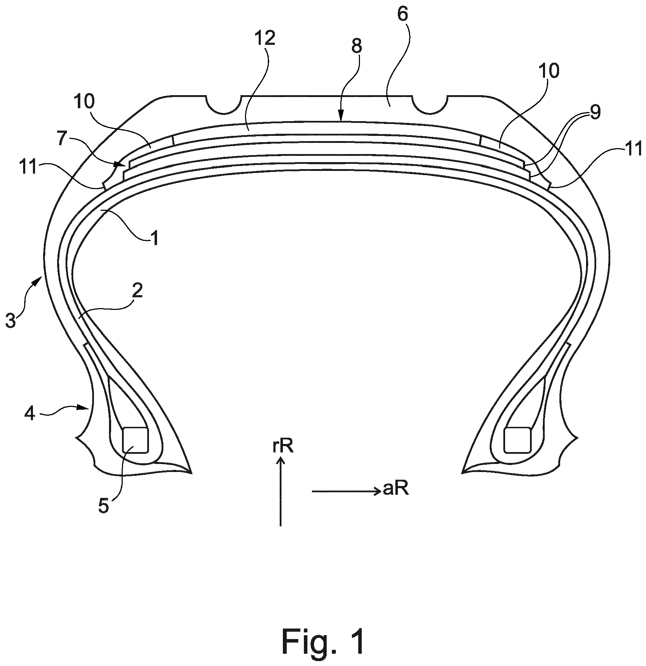

Die Figur 1 zeigt einen radialen Querschnitt durch einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial außerhalb der Karkasse befindlichen profilierten Laufstreifen 6 und einen zwischen dem Laufstreifen 6 und der Karkasse 2 angeordneten, zwei Festigkeitsträgerlagen beinhaltenden Gürtel 7, welcher radial außen mit der Gürtelbandage abgedeckt ist, welche eine Bandagenlage 8 umfasst. Die Bandagenlage deckt die Gürtelkanten 9 ab und beinhaltet Festigkeitsträger, die parallel in Umfangsrichtung des Fahrzeugluftreifens entlang der axialen Breite gewickelt sind.

Die Bandagenlage 8 umfasst in ihrer axialen Ausdehnung zwei Seitenabschnitte 10, welche jeweils eine axiale Kante 11 der Bandagenlage 8 umfassen, sowie einen zwischen den beiden Seitenabschnitten 10 angeordneten Mittenabschnitt 12 umfasst. Jeder der beiden Seitenabschnitt 10 deckt auf seiner axialen Seite des Reifens zumindest die Gürtelkante 9 der radial äußersten Gürtellage sowie die axial äußerste Gürtelkante 9 des Gürtels 7 ab.

Die Festigkeitsträger der beiden Seitenabschnitte 10 sind als Hybridcorde aus einem hochmoduligen Garn und einem niedermoduligen Garn ausgebildet und weisen eine Cord-Feinheit von höchstens 550 dtex, bevorzugt von höchstens 500 dtex, besonders bevorzugt von höchstens 460 dtex auf. Die Bruchdehnung der Hybridcorde beträgt dabei 5% bis 6%. Der oder die Festigkeitsträger des Mittenabschnitts 12 sind Corde aus zwei vertwisteten niedermoduligen Garnen und weisen einen geringeren Elastizitätsmodul auf als die Hybridcorde der Seitenabschnitte 10, jeweils gemessen gemäß ASTM D885M bei einer Dehnung von 3%. Weiter beträgt die Cord-Feinheit höchstens 1100 dtex, bevorzugt höchstens 600 dtex, besonders bevorzugt höchstens 500 dtex. Die Bruchdehnung beträgt dabei mind. 7%. Die Festigkeitsträger der Gürtelbandagenlage 8 sind mit einem RFL-Dip versehen und unter Temperatureinwirkung verstreckt.

In einer Ausführungsform der Erfindung ist das hochmodulige Garn der Hybridcorde der Seitenabschnitte 10 ein Aramidgarn der Feinheit 220 dtex und das niedermodulige Garn entweder ein PA 6.6 -Garn der Feinheit 235 dtex oder ein PET-Garn der Feinheit 238 dtex. Der oder die Festigkeitsträger des Mittenabschnitts 12 ist aus zwei miteinander vertwisteten Garnen aus PA 6.6 der Feinheit 470 dtex oder kleiner oder aus zwei miteinander vertwisteten Garnen aus PET der Feinheit 550 dtex oder kleiner gebildet.

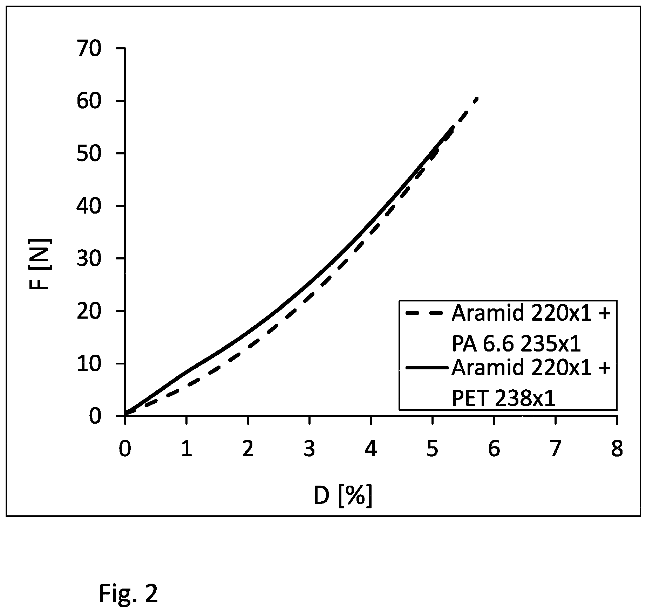

Die Fig.2 gibt Kraft-Dehnungskurven, ermittelt gemäß ASTM D885, von gedippten Hybridkorden für den Einsatz in den Seitenbereichen der Gürtelbandage eines wie in Fig. 1 gezeigten Fahrzeugluftreifens an. "Gedippt" bedeutet: Der Cord wurde in einer dem Fachmann bekannten Weise nach dem Twisten mit einer Dip-Lösung imprägniert und damit gummifreundlich ausgerüstet und unter Temperatureinwirkung verstreckt. Die horizontale Achse zeigt die Dehnung D, die vertikale Achse die Kraft F an.

Es sind Kraft-Dehnungskurven der zwei oben beschriebenen Hybridcorde der Konstruktionen Aramid 220x1 + PA 6.6 235x1 und Aramid 220x1 + PET 238x1 dargestellt. Es ist ersichtlich, dass beide Hybridcorde eine Bruchdehnung von 5 % bis 6 % aufweisen. In den Seitenbereichen ist somit eine ausreichende Erhebung beim Reifenbau gewährleistet.

Weiter ist ersichtlich, dass die Mitten-Corde einen geringeren Elastizitätsmodul bei 3% Dehnung aufweisen als die Hybridcorde der Seitenabschnitte. Die Verwendung von hochmoduligem Aramid-Material in den Seitenbereichen gewährleistet eine gute Bindung der dort, insbesondere im Hochgeschwindigkeitseinsatz, auftretenden Kräfte, wohingegen der Fahrzeugluftreifen durch das niedermoduligere PA6.6 oder PET im Mittenbereich eine runde Kontur entwickelt und somit positive Hochgeschwindigkeitseigenschaften aufweist.

### Bezugszeichenliste

- 1: Innenschicht
- 2: Karkasse
- 3: Seitenwand
- 4: Wulstbereich
- 5: Wulstkern
- 6: Laufstreifen
- 7: Gürtel
- 8: Bandagenlage
- 9: Gürtelkante
- 10: Seitenabschnitt
- 11: axiale Kante der Bandagenlage
- 12: Mittenabschnitt
- aR: axiale Richtung
- rR: radiale Richtung

## Patentansprüche

1. Fahrzeugluftreifen mit einer Karkasse (2), einem profilierten Laufstreifen (6), einem Gürtel (7) und einer diesen Gürtel (7) bedeckenden ein- oder mehrlagigen Gürtelbandage mit in Umfangsrichtung des Reifens verlaufenden Festigkeitsträgern,
• wobei zumindest eine Bandagenlage (8) der Gürtelbandage in ihrer axialen Ausdehnung zwei Seitenabschnitte (10), welche jeweils eine axiale Kante (11) der Bandagenlage (8) umfassen, sowie einen zwischen den beiden Seitenabschnitten (10) angeordneten Mittenabschnitt (12) umfasst,
• wobei jeder Seitenabschnitt (10) zumindest einen Hybridfestigkeitsträger aufweist,
• wobei der Mittenabschnitt (12) zumindest einen Festigkeitsträger aufweist, welcher einen geringeren Elastizitätsmodul aufweist als die Hybridfestigkeitsträger der Seitenabschnitte (10), jeweils gemessen gemäß ASTM D885M bei einer Dehnung von 3% und
• wobei der zumindest eine Hybridfestigkeitsträger jedes Seitenabschnittes (10) ein Hybridcord aus wenigstens zwei miteinander vertwisteten Garnen ist, wobei wenigstens ein erstes Garn ein hochmoduliges Garn ist und wobei ein weiteres Garn ein niedermoduliges Garn ist
**dadurch gekennzeichnet, dass**
• der zumindest eine Hybridfestigkeitsträger jedes der Seitenabschnitte (10) eine Feinheit von höchstens 550 dtex, bevorzugt von höchstens 500 dtex, besonders bevorzugt von höchstens 460 dtex aufweisen und
• dass der zumindest eine Festigkeitsträger des Mittenabschnitts (12) eine Feinheit von höchstens 1100 dtex, bevorzugt von höchstens 600 dtex, besonders bevorzugt von höchstens 500 dtex, aufweist.

2. Fahrzeugluftreifen nach Anspruch 1, **dadurch gekennzeichnet, dass** die Bruchdehnung der Hybridfestigkeitsträger der Seitenabschnitte (10) in einem Bereich von 4 % bis 7 %, bevorzugt in einem Bereich von 5 % bis 6 %, liegt.

3. Fahrzeugluftreifen nach Anspruch 1, **dadurch gekennzeichnet, dass** die Bruchdehnung des Festigkeitsträgers im Mittenbereich (12) mindestens 7 %, bevorzugt mindestens 8 %, liegt.

4. Fahrzeugluftreifen nach Anspruch 2 oder 3, **dadurch gekennzeichnet, dass** das hochmodulige Garn aus Aramidfaser, Carbonfaser, Glasfaser oder Basalt besteht.

5. Fahrzeugluftreifen nach einem oder mehreren der Ansprüche 2 bis 4, **dadurch gekennzeichnet, dass** das niedermodulige Garn das niedermodulige Garn aus einem Polyamid (PA), bevorzugt aus PA 6.6 oder PA 10.10, oder einem Polyester, bevorzugt aus Polyethylenterephthalat (PET), besteht.

6. Fahrzeugluftreifen nach einem oder mehreren der Ansprüche 2 bis 5, **dadurch gekennzeichnet, dass** die einzelnen Garne der Hybridcorde der Seitenabschnitte (10) jeweils eine Feinheit von höchstens 320 dtex, bevorzugt von höchstens 240 dtex, aufweisen.

7. Fahrzeugluftreifen nach einem oder mehreren der Ansprüche 1 bis 6, **dadurch gekennzeichnet, dass** der Festigkeitsträger des Mittenabschnitts (12) ein Garn oder ein Cord ist.

8. Fahrzeugluftreifen nach einem oder mehreren der Ansprüche 1 bis 7, **dadurch gekennzeichnet, dass** der Festigkeitsträger des Mittenabschnitts (12) aus einem Polyamid (PA), bevorzugt aus PA 6.6 oder PA 10.10, oder einem Polyester, bevorzugt aus Polyethylenterephthalat (PET), besteht.

9. Fahrzeugluftreifen nach einem oder mehreren der Ansprüche 1 bis 8, **dadurch gekennzeichnet, dass** jeder Seitenabschnitt (10) auf seiner axialen Seite des Reifens zumindest die Gürtelkante (9) der radial äußersten Gürtellage sowie die axial äußerste Gürtelkante (9) des Gürtels (7) abdeckt.

10. Fahrzeugluftreifen nach einem oder mehreren der Ansprüche 1 bis 9, **dadurch gekennzeichnet, dass** es sich um einen Reifen für Personenkraftwagen handelt.

## Claims

1. Pneumatic vehicle tire having a carcass (2), a profiled tread (6), a belt (7) and a single or multi-ply belt bandage having strength members running in the circumferential direction of the tire which covers this belt (7),
• wherein at least one bandage ply (8) of the belt bandage comprises in its axial extent two lateral sections (10), each comprising an axial edge (11) of the bandage ply (8), and a central section (12) arranged between the two lateral sections (10),
• wherein each lateral section (10) comprises at least one hybrid strength member,
• wherein the central section (12) comprises at least one strength member having a lower modulus of elasticity than the hybrid strength members of the lateral sections (10), in each case measured as per ASTM D885M at an extension of 3% and
• wherein the at least one hybrid strength member of each lateral section (10) is a hybrid cord made of at least two yarns twisted together, wherein at least a first yarn is a high-modulus yarn and wherein a further yarn is a low-modulus yarn,
**characterized in that**
• the at least one hybrid strength member of each of the lateral sections (10) has a fineness of not more than 550 dtex, preferably of not more than 500 dtex, particularly preferably of not more than 460 dtex and
• the at least one strength member of the central section (12) has a fineness of not more than 1100 dtex, preferably of not more than 600 dtex, particularly preferably of not more than 500 dtex.

2. Pneumatic vehicle tire according to Claim 1, **characterized in that** the breaking extension of the hybrid strength members of the lateral sections (10) is in a range from 4% to 7%, preferably in a range from 5% to 6%.

3. Pneumatic vehicle tire according to Claim 1, **characterized in that** the breaking extension of the strength member in the central region (12) is at least 7%, preferably at least 8%.

4. Pneumatic vehicle tire according to Claim 2 or 3, **characterized in that** the high-modulus yarn consists of aramid fibers, carbon fibers, glass fibers or basalt.

5. Pneumatic vehicle tire according to one or more of Claims 2 to 4, **characterized in that** the low-modulus yarn the low-modulus yarn consists of a polyamide (PA), preferably of PA 6.6 or PA 10.10, or a polyester, preferably of polyethylene terephthalate (PET).

6. Pneumatic vehicle tire according to one or more of Claims 2 to 5, **characterized in that** the individual yarns of the hybrid cords of the lateral sections (10) each have a fineness of not more than 320 dtex, preferably of not more than 240 dtex.

7. Pneumatic vehicle tire according to one or more of Claims 1 to 6, **characterized in that** the strength member of the central section (12) is a yarn or a cord.

8. Pneumatic vehicle tire according to one or more of Claims 1 to 7, **characterized in that** the strength member of the central section (12) consists of a polyamide (PA), preferably of PA 6.6 or PA 10.10, or a polyester, preferably of polyethylene terephthalate (PET).

9. Pneumatic vehicle tire according to one or more of Claims 1 to 8, **characterized in that** each lateral section (10) on its axial side of the tire covers at least the belt edge (9) of the radially outermost belt ply and the axially outermost belt edge (9) of the belt (7).

10. Pneumatic vehicle tire according to one or more of Claims 1 to 9, **characterized in that** said tire is a tire for passenger cars.

## Revendications

1. Pneumatique de véhicule comprenant une carcasse (2), une bande de roulement profilée (6), une nappe d'armature (7) et un bandage de nappe monocouche ou multicouche qui recouvre cette nappe d'armature (7) et qui est pourvu de renforts s'étendant dans la direction circonférentielle du pneumatique,
• au moins une couche (8) du bandage de nappe comportant dans son étendue axiale deux portions latérales (10), qui chacune comprennent un bord axial (11) de la couche de bandage (8), et une portion médiane (12) qui est disposée entre les deux portions latérales (10),
• chaque portion latérale (10) comportant au moins un renfort hybride,
• la portion médiane (12) comportant au moins un renfort dont le module d'élasticité est plus faible que celui du renfort hybride des portions latérales (10), mesurée à chaque fois selon ASTM D885M avec un allongement de 3 % et
• l'au moins un renfort hybride de chaque portion latérale (10) étant un cordon hybride comprenant au moins deux fils torsadés l'un avec l'autre, au moins un premier fil étant un fil à module élevé et un autre fil étant un fil à module faible,
**caractérisé en ce que**
• l'au moins un renfort hybride de chacune des portions latérales (10) a une finesse de 550 dtex maximum, de préférence de 500 dtex maximum, de manière particulièrement préférée de 460 dtex maximum, et
• l'au moins un renfort de la portion médiane (12) a une finesse de 1100 dtex maximum, de préférence de 600 dtex maximum, de manière particulièrement préférée de 500 dtex maximum.

2. Pneumatique de véhicule selon la revendication 1, **caractérisé en ce que** l'allongement à la rupture des renforts hybrides des portions latérales (10) est dans la gamme allant de 4 % à 7 %, de préférence de 5 % à 6 %.

3. Pneumatique de véhicule selon la revendication 1, **caractérisé en ce que** l'allongement à la rupture du renfort dans la région médiane (12) est d'au moins 7 %, de préférence d'au moins 8 %.

4. Pneumatique de véhicule selon la revendication 2 ou 3, **caractérisé en ce que** le fil à haut module comprend de la fibre d'aramide, de la fibre de carbone, de la fibre de verre ou du basalte.

5. Pneumatique de véhicule selon l'une au moins des revendications 2 à 4, **caractérisé en ce que** le fil à faible module le fil à faible module comprend un polyamide (PA), de préférence du PA 6.6 ou du PA 10.10, ou un polyester, de préférence du polyéthylène téréphtalate (PET).

6. Pneumatique de véhicule selon l'une au moins des revendications 2 à 5, **caractérisé en ce que** les fils individuels des cordons hybrides des portions latérales (10) ont chacun une finesse de 320 dtex maximum, de préférence de 240 dtex maximum.

7. Pneumatique de véhicule selon l'une au moins des revendications 1 à 6, **caractérisé en ce que** le renfort de la portion médiane (12) est un fil ou un cordon.

8. Pneumatique de véhicule selon l'une au moins des revendications 1 à 7, **caractérisé en ce que** le renfort de la portion médiane (12) comprend du polyamide (PA), de préférence du PA 6.6 ou PA 10.10, ou du polyester, de préférence du polyéthylène téréphtalate (PET).

9. Pneumatique de véhicule selon l'une au moins des revendications 1 à 8, **caractérisé en ce que** chaque portion latérale (10) recouvre sur son côté axial du pneumatique au moins le bord de nappe (9) de la couche de nappe radialement la plus extérieure et le bord de nappe axialement le plus extérieur (9) de la nappe d'armature (7).

10. Pneumatique de véhicule selon l'une au moins des revendications 1 à 9, **caractérisé en ce que** ledit pneumatique est un pneumatique de voiture, particulière.
